# FASCICULE DE BREVET EUROPEEN

(11) **EP 2 517 187 B1**
(45) Date de publication et mention de la délivrance du brevet: **27.11.2013**
(21) Numéro de dépôt: 10809299.0
(22) Date de dépôt: 20.12.2010
(51) Int. Cl.: H04Q 9/00

(54) **PROCEDE ET DISPOSITIF DE GESTION D'ENVOIS DE MESURES EFFECTUEES PERIODIQUEMENT PAR UN CAPTEUR**
VERFAHREN UND VORRICHTUNG ZUR VERWALTUNG DER ÜBERTRAGUNG VON PERIODISCH AUSGEFÜHRTEN MESSUNGEN EINES SENSORS
METHOD AND DEVICE FOR MANAGING TRANSMISSIONS OF MEASUREMENTS PERIODICALLY CARRIED OUT BY A SENSOR

(30) Priorité: 21.12.2009 FR 0959294
(43) Date de publication de la demande: 31.10.2012
(73) Titulaire: Orange, 75015 Paris (FR)
(72) Inventeur: KOUNTOURIS, Apostolos, F-38000 Grenoble (FR)
(86) Numéro de dépôt international: PCT/FR2010/052821
(87) Numéro de publication internationale: WO 2011/083248

(56) Documents cités:
- WO-A1-2009/078519
- US-A1- 2009 135 018

## Description

L'invention se rapporte au domaine des réseaux de capteurs, en particulier celui des applications de mesure à distance pour lesquelles un élément de collecte recueille les mesures effectuées par une pluralité de capteurs.

Un tel système est décrit dans le document US 2009/0135018.

Des systèmes connus de télémesure à grande échelle sont basés sur le réseau de communications mobiles de type GSM (pour "Global System for Mobile Communications"). Ces systèmes sont par exemple des systèmes de relèves de compteurs d'eau, d'électricité ou de gaz ou encore des systèmes de surveillance de ressources d'une agglomération telles que l'arrosage, la pollution, des places de parking...

Dans ces systèmes, les capteurs sont équipés d'un module de communication GSM et transmettent à intervalles réguliers des relevés de mesure à une station de base apte à traiter les informations reçues.

Selon les systèmes, les informations sont soit transmises suite à une requête émise régulièrement par la station de base, soit transmises directement par les capteurs.

Les informations peuvent être chiffrées pour assurer leur confidentialité.

Les techniques de chiffrement protègent le contenu des informations mais sont inefficaces face à des attaques d'interception et au brouillage.

Il existe par ailleurs des techniques de protection contre le brouillage, notamment dans le domaine militaire. De telles techniques s'appliquent au protocole de communication utilisé sur un lien de communication au niveau de la couche physique. Une technique connue consiste par exemple à étaler le spectre. Une telle modification appliquée à un protocole normalisé, comme par exemple le protocole GSM, nécessite une adaptation de la norme.

Ces techniques sont trop complexes et trop coûteuses pour être mises en oeuvre dans un système de télémesure comportant un nombre important de capteurs.

Il existe donc un besoin d'une solution simple pour protéger un système de télémesure contre des attaques d'interception et/ou de brouillage.

L'invention vient améliorer la situation.

A cet effet, l'invention se rapporte à un procédé de gestion d'envois d'une pluralité d'ensembles de mesures effectuées périodiquement par un capteur de mesures apte à communiquer avec un dispositif de collecte à travers un réseau radio selon la revendication 1.

Des messages relatifs à des mesures effectuées périodiquement par le capteur sont échangés entre le dispositif de collecte et le capteur à des dates non périodiques, dissociées des dates de mesure. Ceci permet de renforcer la robustesse du lien de communication entre le capteur et le dispositif de collecte.

En effet, ainsi, un dispositif de brouillage ou d'interception ne sait pas quand les rapports de mesure seront émis à moins de brouiller ou d'écouter le lien en permanence. Il va ainsi consommer plus d'énergie. L'invention permet donc de rendre plus complexe le brouillage et/ou l'interception des données de mesure. L'invention ne nécessite pas de modification du protocole de communication.

En outre l'augmentation du temps de brouillage rend plus vulnérable le brouilleur dans la mesure où il peut être détecté plus facilement par le système de télémesure.

Selon un mode de réalisation du procédé de gestion de l'invention, le message relatif à l'ensemble de mesures est un message comprenant un rapport de mesures relatif à l'ensemble de mesures effectuées par le capteur.

Ce mode de réalisation est simple à mettre en oeuvre dans un capteur d'un système de télémesure dans lequel le dispositif de télécollecte est en permanence à l'écoute des messages provenant de différents capteurs. Un rapport de mesures enregistré lors de chaque mesure est transmis à une date d'envoi dissociée de la date de la mesure. La dissociation de la date d'envoi et de la date de mesure rend plus difficile l'interception et/ou le brouillage des rapports de mesure.

Le procédé peut être mis en oeuvre dans les systèmes existants, par exemple par téléchargement.

En outre, la mise en place de capteurs selon l'invention dans un système de télémesure existant peut être progressive. En effet, le système de télémesure peut fonctionner avec des capteurs ne mettant pas en oeuvre le procédé et des capteurs mettant en oeuvre le procédé.

Selon un autre mode de réalisation du procédé de gestion de l'invention, le message relatif à l'ensemble de mesures est une demande de rapport de mesures.

Ce mode de réalisation est adapté aux systèmes de télémesure dans lesquels les rapports de mesures des capteurs sont transmis par les capteurs suite à une requête d'un dispositif de collecte. Le procédé est dans ce cas mis en oeuvre dans le dispositif de collecte. La transmission par le dispositif de collecte d'un message relatif à au moins un ensemble de mesures à un capteur provoque la transmission, si possible immédiate par le capteur d'au moins un rapport de mesures. Les dates d'envoi des messages étant non périodiques et dissociées des dates de mesures, les rapports de mesure sont transmis eux aussi de façon non périodique. Ainsi, la prévision des dates d'envoi des messages, et en conséquence des rapports de mesure, n'est pas prévisible compliquant l'action d'interception et/ou de brouillage.

La mise en oeuvre s'effectuant uniquement sur le dispositif de collecte, elle est peu coûteuse.

Selon un mode de réalisation particulier du procédé de gestion de l'invention, le message relatif à un ensemble de mesures est transmis à la date d'envoi déterminée pour ledit ensemble de mesures.

La planification des envois étant très simple, ce mode de réalisation présente l'avantage d'être simple à réaliser.

Selon un autre mode de réalisation particulier du procédé de gestion de l'invention, le message relatif à un ensemble de mesures est transmis à la date d'envoi déterminée pour un ensemble de mesures précédent.

Ce mode de réalisation permet d'envoyer des rapports de mesure dans un ordre dispersé par rapport à l'ordre de prise des mesures.

Selon un mode de réalisation, le message est relatif à au moins un premier et un deuxième ensembles de mesures et est transmis à une des dates déterminées pour un de ces deux ensembles de mesures.

Ainsi, plusieurs rapports de mesures sont transmis dans un même message.

Ceci permet de limiter le nombre de messages transmis. La non régularité de la taille et du format du contenu des messages contribue à rendre difficile l'analyse des messages qui pourraient être interceptés.

Selon un mode de réalisation utilisé en combinaison du mode de réalisation précédent, le procédé comprend en outre une étape de transmission d'un message relatif à un faux ensemble de mesures et/ou à un ensemble de mesures redondantes à une autre des dates déterminées pour un de ces deux ensembles de mesures.

La transmission de "faux" messages et/ou de messages redondants permet d'induire en erreur un éventuel pirate.

Selon un autre mode de réalisation, aucun message n'est transmis à une autre des dates déterminées pour un de ces deux ensembles de mesures.

La réduction du nombre total de messages transmis permet de diminuer la consommation des équipements, et notamment celle des capteurs.

Le regroupement de rapports de mesures permet également de réduire le nombre de messages transmis et ainsi de réduire l'activité sur le lien de communication.

Selon une caractéristique particulière du procédé de gestion de l'invention, la loi de distribution aléatoire est une loi de distribution uniforme sur une fenêtre temporelle prédéterminée.

La sélection uniforme offre une incertitude maximale quant à l'anticipation des envois. Le choix d'une fenêtre temporelle supérieure à la période de mesures entraîne un chevauchement des fenêtres temporelles qui permet d'accroître cette incertitude.

Selon une autre caractéristique particulière du procédé de gestion de l'invention, la loi de distribution aléatoire est une loi de distribution exponentielle sur une fenêtre temporelle prédéterminée.

L'application d'une loi de distribution exponentielle permet de régler l'activité d'envoi par réglage d'un seul paramètre, le taux d'envoi par unité de temps. Ce mode de réalisation permet une décorrélation forte entre les instants de mesure et les instants d'envois

L'invention se rapporte également à un dispositif de gestion d'envois d'une pluralité d'ensembles de mesures effectuées périodiquement par un capteur de mesures apte à communiquer avec un dispositif de collecte à travers un réseau radio selon la revendication 11.

Un tel dispositif est facilement intégrable dans un capteur ou dans un dispositif de collecte. Il peut être aussi un dispositif indépendant apte à communiquer avec un capteur ou avec un dispositif de collecte.

L'invention concerne également un capteur comprenant un dispositif de gestion tel que décrit précédemment.

L'invention est simple à mettre en oeuvre dans la mesure où le capteur comprend déjà un timer, un microcontrôleur et des moyens de stockage d'informations.

L'invention concerne encore un dispositif de collecte comprenant un dispositif de gestion tel que décrit précédemment.

L'invention concerne enfin un produit programme d'ordinateur comprenant des instructions pour mettre en oeuvre les étapes du procédé de gestion d'envois d'une pluralité d'ensembles de mesures tel que décrit précédemment, lorsqu'il est chargé et exécuté par un processeur.

D'autres particularités et avantages de la présente invention apparaitront dans la description suivante de modes de réalisation donnés à titre d'exemples non limitatifs, en référence aux dessins annexés, dans lesquels :
- la figure 1 est un schéma illustrant un premier système de télémesure de l'invention selon un premier mode de réalisation,
- la figure 2 est un organigramme illustrant les différentes étapes d'un procédé de gestion mis en oeuvre dans le premier système selon un premier mode de réalisation,
- la figure 3 est un diagramme temporel illustrant le premier mode de réalisation de l'invention,
- la figure 4 est un organigramme illustrant les différentes étapes d'un procédé de gestion mis en oeuvre dans le premier système selon un deuxième mode de réalisation,
- la figure 5 est un diagramme temporel illustrant le deuxième mode de réalisation de l'invention,
- la figure 6 est un schéma illustrant un deuxième système de télémesure de l'invention selon un deuxième mode de réalisation,
- la figure 7 est un organigramme illustrant les différentes étapes d'un procédé de gestion mis en oeuvre dans le deuxième système selon un mode de réalisation,
- la figure 8 est un diagramme temporel illustrant un mode de réalisation de l'invention,
- la figure 9 est un schéma bloc représentant un dispositif apte à réaliser les étapes d'un procédé de gestion selon un mode de réalisation de l'invention.

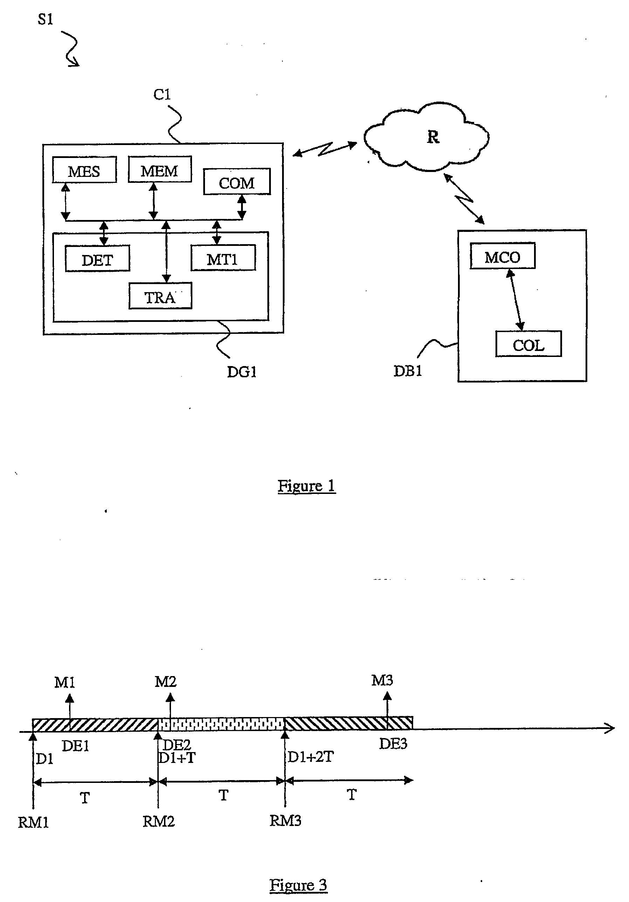

Un premier mode de réalisation de l'invention va maintenant être décrit en référence aux figures 1 à 3.

En référence à la figure 1, un système de télémesure S1 comprend un dispositif de collecte DB1 et un capteur C1 aptes à communiquer via un réseau de communication radio R.

Le réseau R est un réseau de communication sans fil, par exemple de type GSM.

Le dispositif de collecte DB1 comporte un module de communication MCO apte à transmettre et à recevoir des données via le réseau de communication R et un module de traitement COL apte à collecter des données provenant du capteur C1 et à les traiter.

A titre d'alternative, le système S1 comporte une pluralité de capteurs et le module COL du dispositif de collecte DB1 est apte à traiter les données émises des différents capteurs et reçues par le module de communication MCO.

Dans le mode de réalisation décrit ici, le dispositif de collecte DB1 est en permanence à l'écoute de données en provenance du capteur C1.

Le capteur C1 comprend un module de mesures MES, un module de communication COM, une mémoire de mesures MEM et un dispositif de gestion DG1.

Le module de mesures MES est apte à effectuer périodiquement un ensemble de mesures à intervalles réguliers T et à enregistrer le résultat de ces mesures dans la mémoire de mesures MEM en association avec la date de la mesure.

A titre d'alternative, la date de mesure n'est pas enregistrée en association avec les mesures dans la mémoire MEM.

La période T séparant deux prises de mesure consécutives est prédéterminée en fonction du type d'application.

Un ensemble de mesures comprend une ou plusieurs mesures.

Par exemple, le module de mesures MES est apte à lire d'une part un premier compteur indiquant un nombre de kilowatts correspondant à une première période d'une journée, appelée "période heures creuses" et d'autre part, un deuxième compteur indiquant un nombre de kilowatts correspondant à une deuxième période de la journée, appelée "période heures pleines".

Le module de communication COM est apte à communiquer avec le module de communication MCO du dispositif de collecte DB1 à travers le réseau radio R.

Le dispositif de gestion DG1 comporte un module de détermination DET, un module de traitement TRA et une mémoire MT1.

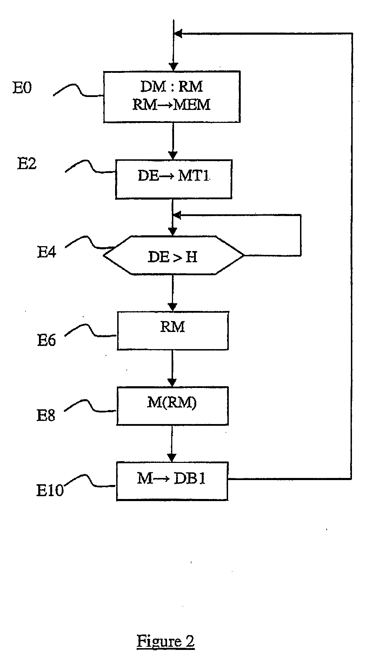

Un premier mode de réalisation du procédé de gestion de l'invention mis en oeuvre dans le système S1 va maintenant être décrit en référence aux figures 2 et 3.

Lors d'une première étape E0, à une date de mesure DM, le module de mesure MES du capteur C1 mesure un ensemble de mesures EM et enregistre dans la mémoire MEM un rapport de mesures RM contenant l'ensemble de mesures EM en association avec la date de mesure DM.

L'étape E0 est suivie d'une étape E2 lors de laquelle le module de détermination DET détermine une date d'envoi DE pour l'ensemble de mesures EM et l'enregistre dans la mémoire MT1.

Dans le mode de réalisation décrit, la date d'envoi DE est une valeur aléatoire déterminée dans une fenêtre temporelle de longueur prédéterminée T, à partir de l'instant d'occurrence DM de la mesure correspondante.

La valeur aléatoire est par exemple déterminée sur la base d'une loi de distribution des probabilités uniforme sur une fenêtre temporelle de longueur T.

Ainsi, la date d'envoi DE se situe dans l'intervalle de temps [DM, DM+T].

A titre d'alternative, la longueur de la fenêtre temporelle est supérieure ou inférieure à la période T de prise de mesures.

Lors d'une étape E4, le module de traitement TRA du dispositif de gestion DG1 lit la date d'envoi DE dans la mémoire MT1 et la compare à la date courante H.

Si la date d'envoi DE est supérieure à la date courante H, l'étape E4 est réitérée.

Sinon, lors d'une étape E6, le module de traitement TRA accède à la mémoire MEM et y lit le rapport de mesures RM.

L'étape E6 est suivie d'une étape E8 lors de laquelle le module de traitement TRA compose un message M comprenant le rapport de mesures RM.

Le message M est par exemple un message de type SMS (pour "Short Message Service").

A titre d'alternative, le message M est établi selon un autre protocole de communication.

Puis, lors d'une étape suivante E10, le module de traitement TRA transmet le message M au dispositif de collecte DB1 via le module de communication COM et le réseau R.

Les étapes E0 à E10 sont ensuite réitérées pour les fenêtres temporelles suivantes.

L'étape E0 est réalisée au début de chaque période temporelle T. Si nécessaire pour respecter ce délai, les étapes E0 et E2 d'une part et les étapes E4 à E10 d'autre part sont réalisées en parallèle.

La figure 3 est un diagramme illustrant un exemple de dates de mesures et de dates d'envoi associées.

Un premier rapport de mesure RM1 est enregistré à la date D1 et une première date d'envoi DE1 est déterminée dans l'intervalle de temps [D1,D1+T]. Un deuxième rapport de mesure RM2 est enregistré à la date D1+T et une deuxième date d'envoi DE2 est déterminée dans l'intervalle de temps [D1+T,D1+2T]. Un troisième rapport de mesure RM3 est enregistré à la date D1+2T et une troisième date d'envoi DE3 est déterminée.

Un message M1 contenant le rapport de mesures RM1 est transmis à la date d'envoi DE1, un message M2 contenant le rapport de mesures RM2 est transmis à la date d'envoi DE2, un message M3 contenant le rapport de mesures RM3 est transmis à la date d'envoi DE3.

Les rapports de mesures RM1, RM2... enregistrés périodiquement ne sont pas envoyés de façon périodique.

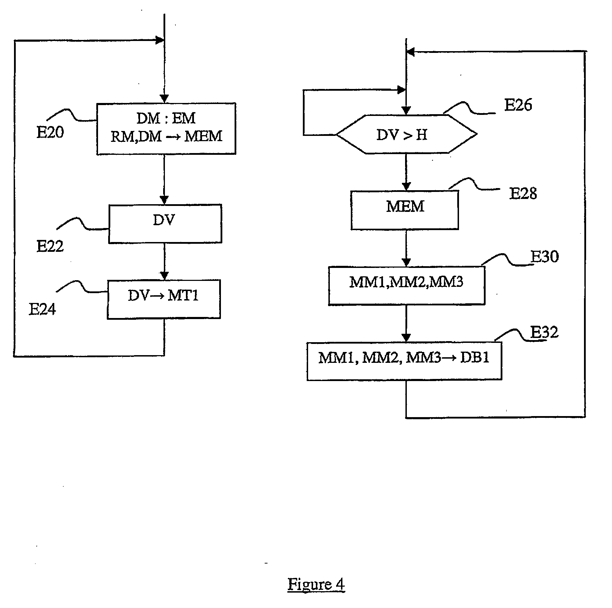

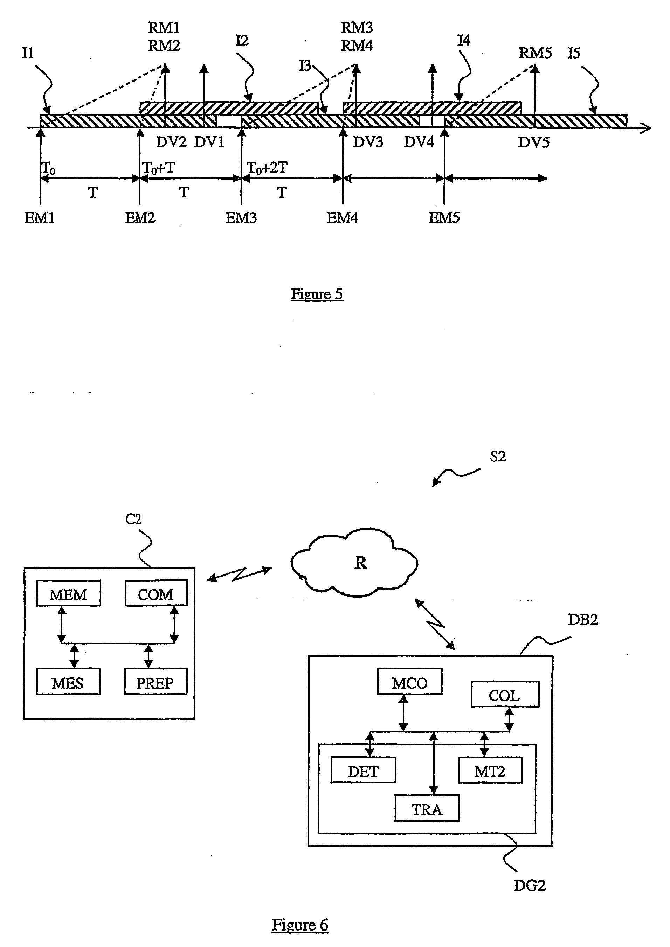

Un deuxième mode de réalisation du procédé de gestion de l'invention mis en oeuvre dans le système S1 va maintenant être décrit en référence aux figures 4 et 5.

Lors d'une première étape E20, à une date DM, le module de mesure MES du capteur C1 mesure un ensemble de mesures EM et enregistre dans la mémoire MEM un rapport de mesures RM contenant l'ensemble de mesures EM en association avec la date DM.

L'étape E20 est suivie d'une étape E22 lors de laquelle le module de détermination DET détermine une date d'envoi DV pour l'ensemble de mesure EM.

Dans le mode de réalisation décrit, la date d'envoi DV est une valeur aléatoire déterminée dans une fenêtre temporelle de longueur prédéterminée Td supérieure à la période T de prise de mesures, et commençant à l'instant d'occurrence DM de la mesure EM correspondante. La valeur aléatoire est par exemple déterminée sur la base d'une loi de distribution des probabilités uniforme sur la fenêtre temporelle Td.

Ainsi, la date d'envoi DV déterminée pour le premier ensemble de mesures EM est située dans l'intervalle temporel [DM, DM+Td].

A titre d'alternative, la fenêtre temporelle commence à un instant différent de l'instant d'occurrence DM de la mesure correspondante. Par exemple, la fenêtre temporelle commence à la date d'envoi de la mesure précédente.

Egalement, à titre d'alternative, les fenêtres temporelles sont de longueur inférieure à la période T des mesures. Dans ce cas, les fenêtres temporelles peuvent être disjointes.

Lors d'une étape suivante E24, la date d'envoi DV est enregistrée dans la mémoire MT1. La mémoire MT1 contient ainsi au moins une date d'envoi DV.

Les étapes E20 à E24 sont réitérées à intervalles de temps réguliers T.

Lors d'une étape E26, exécutée en parallèle des étapes E20 à E24, le module de traitement TRA du dispositif de gestion DG1 compare l'heure courante H à la ou aux dates d'envoi DV enregistrées dans la mémoire MT1.

A titre d'alternative, lors de l'étape E24, les dates d'envoi sont classées dans la mémoire MT1 par ordre d'occurrence et, lors de l'étape E26, le module de traitement TRA du dispositif de gestion DG1 compare l'heure courante H à la date d'envoi DV située en première position dans la mémoire MT1.

Si la date d'envoi DV est supérieure à la date courante H, l'étape E26 est réitérée.

Sinon, lors d'une étape E28, le module de traitement TRA accède à la mémoire MEM.

Si la mémoire MEM contient un seul rapport de mesures à transmettre, l'étape E28 est suivie d'une étape E30 lors de laquelle le module de traitement TRA compose un message MM1 comprenant ce rapport de mesures.

Si la mémoire MEM contient plusieurs rapports de mesures à transmettre, le module de traitement TRA, lors de l'étape E30, sélectionne ces rapports de mesures et compose un message MM2 comprenant le ou les rapports de mesures sélectionnés.

A titre d'alternative, dans le cas où plusieurs rapports de mesure sont sélectionnés, les rapports de mesure sélectionnés sont agrégés par une fonction d'agrégation et le message MM2 comprend le résultat de l'agrégation. Ceci permet de réduire la longueur du message MM2.

A titre d'alternative, seul le rapport de mesures correspondant à la date d'envoi est sélectionné.

Encore à titre d'alternative, seul le rapport de mesures dont la date de mesures associée est la plus ancienne est sélectionné.

Si la mémoire MEM ne contient aucun rapport de mesures à envoyer, un message MM3 composé lors de l'étape E30 est un message ne comportant pas de rapport de mesures ou comportant un message contenant de fausses mesures. Dans ce cas, le dispositif de collecte DB1 est apte à déterminer que les mesures contenues dans ce message MM3 ne doivent pas être prises en compte.

A titre d'alternative, aucun message n'est envoyé si la mémoire MEM ne contient pas de rapport de mesures à transmettre.

Egalement, à titre d'alternative, le message MM3 est un message redondant contenant un ou plusieurs rapports de mesure déjà transmis.

Puis, lors d'une étape suivante E32, le module de traitement TRA transmet le message construit MM1, MM2 ou MM3 au dispositif de collecte DB1 via le module de communication COM et le réseau R.

Les étapes E26 à E32 sont ensuite réitérées avec les dates d'envoi DV suivantes.

La figure 5 représente un diagramme temporel illustrant un exemple de réalisation du deuxième mode de réalisation.

Des mesures EM1, EM2 EM3...sont réalisées respectivement aux instants T₀, T₀+T, T₀+2T...et des rapports de mesure RM1, RM2, RM3... sont enregistrés pour ces mesures.

Des dates d'envoi DV1, DV2, DV3...relatives à chacune des mesures sont déterminées au fur et à mesure de la prise des mesures.

A la date T₀, une mesure EM1 est effectuée et une date DV1 déterminée sur un intervalle Il. L'intervalle Il est une fenêtre temporelle [T₀, T₀+Td] de longueur Td.

A la date T₀+T, une mesure EM2 est effectuée et une date DV2 est déterminée sur un intervalle I2. Dans cet exemple, là date DV2 est antérieure à la date DV1.

A la date DV2, deux rapports disponibles RM1 ET RM2 dans la mémoire MEM sont transmis

A la date DV 1, aucun rapport de mesures n'est disponible et aucun message n'est transmis.

A la date T₀+2T, une mesure EM3 est réalisée, un rapport de mesure RM3 correspondant à la mesure EM3 est enregistré et une date DV3 est déterminée sur un intervalle I3.

A la date T₀+3T, une mesure EM4 est réalisée, un rapport de mesure RM4 correspondant à la mesure EM4 est enregistré et une date DV4 est déterminée sur un intervalle 14.

A la date DV3, 2 rapports de mesures RM3 et RM4 sont transmis.

A la date DV4, aucun rapport de mesures n'est transmis

A la date T₀+4T, une mesure EM5 est réalisée, un rapport de mesure RM5 correspondant à la mesure EM5 est enregistré et une date DV5 est déterminée sur un intervalle 15.

A la date DV5, le rapport de mesure RM5 est transmis.

Les fenêtres temporelles Il, I2..I5 successives se chevauchent.

Les rapports de mesures ne sont pas transmis de façon périodique. De plus, la taille et le format du contenu des messages transmis est variable. Il n'est donc pas possible de déterminer à l'avance, la date et la durée de transmission d'un rapport de mesure.

Un troisième mode de réalisation de l'invention va maintenant être décrit en référence aux figures 6 à 8.

En référence à la figure 6, un deuxième système de télémesure S2 comprend un dispositif de collecte DB2 et un capteur C2 aptes à communiquer via un réseau de communication radio R.

Le capteur C2 comprend un module de mesures MES, un module de préparation de messages PREP, un module de communication COM et une mémoire de mesures MEM.

Le module de mesures MES est apte à effectuer périodiquement un ensemble de mesures et à enregistrer un rapport de mesures comprenant cet ensemble de mesures dans la mémoire de mesures MEM en association avec la date des mesures.

A titre d'alternative, le rapport de mesures ne comprend pas la date de mesure.

Le dispositif de collecte DB2 comporte un module de communication MCO, un module de collecte COL apte à traiter des données provenant du capteur C2 et un dispositif de gestion DG2.

Le module de communication COM est apte à communiquer avec le dispositif de communication MCO du dispositif de collecte DB2 à travers le réseau de communication R.

Le dispositif de gestion DG2 comporte un module de détermination DET, un module de traitement TRA et une mémoire MT2.

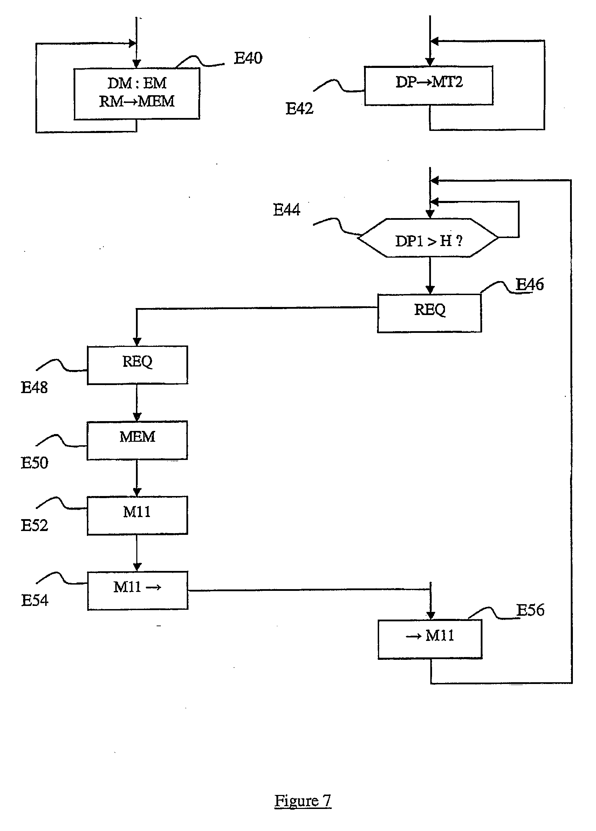

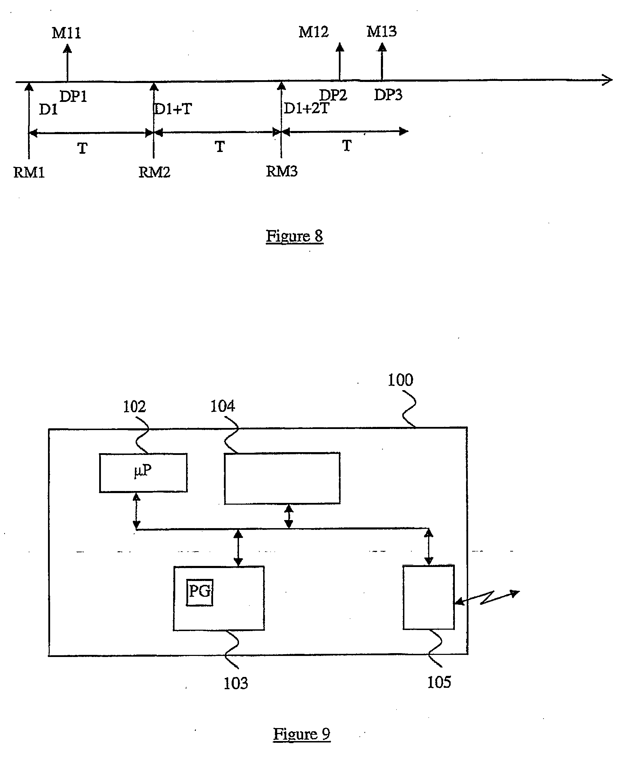

Un mode de réalisation du procédé de gestion de l'invention mis en oeuvre dans le deuxième système S2 va maintenant être décrit en référence aux figures 7 et 8.

Lors d'une première étape E40, à une date DM, le module de mesure MES du capteur C2 réalise un ensemble de mesures EM et enregistre dans la mémoire MEM un rapport de mesures RM contenant l'ensemble de mesures EM en association avec la date D1.

L'étape E40 est réitérée à intervalles de temps réguliers T.

Ainsi, comme illustré sur la figure 8, des rapports de mesure RM1, RM2, RM3...sont enregistrés respectivement en association avec les dates T₀, T₀+T, T₀+2T...

Lors d'une étape E42, le module de détermination DET détermine une date d'envoi DP et l'enregistre dans la mémoire MT2 du dispositif de gestion DG2.

Dans le mode de réalisation décrit, la date d'envoi DP est une valeur aléatoire déterminée sur la base d'une loi de probabilité exponentiellement décroissante en fonction d'un paramètre prédéterminé λ. Le paramètre λ représente, par exemple, un taux d'envoi par unité de temps.

La date d'envoi DP est, par exemple, déterminée sur une fenêtre temporelle déterminée en fonction d'une date d'envoi précédente et d'un taux de décroissance déterminé par un nombre moyen d'événements par unité de temps λ.

Ainsi, la date d'envoi DP déterminée pour l'ensemble de mesures EM est située dans un intervalle de temps allant d'un instant Tm à l'infini, avec une probabilité plus importante en début d'intervalle.

L'instant Tm est déterminé en fonction de la date d'envoi précédemment calculée, la première date étant prédéterminée. Par exemple, l'instant Tm correspond à la date d'envoi DP auquel un délai prédéterminé a été ajouté.

A titre d'alternative, l'instant Tm est déterminé en fonction de plusieurs des dates d'envoi précédemment calculées.

Egalement, à titre d'alternative, l'instant Tm est déterminé en fonction de la date de mesure associée DM.

A titre d'alternative, l'intervalle de temps est compris entre Tm et une valeur maximale Tmax prédéterminée, par exemple correspondant à trois périodes de mesures T. Dans ce cas, la date d'envoi DP déterminée est fixée à Tmax si le résultat de la fonction exponentielle est supérieur à la valeur Tmax.

Egalement à titre d'alternative, l'instant Tm est déterminée en fonction de Tmax.

L'étape E42 est réitérée à intervalles de temps réguliers, par exemple la période de prise de mesures T.

Ainsi, des dates d'envoi DP1, DP2, DP3... sont déterminées.

Lors d'une étape E44, exécutée en parallèle de l'étape E42, le module de traitement TRA du dispositif de gestion DG2 compare la date d'envoi DP1 à la date courante H.

Si la date d'envoi DP1 est supérieure à la date courante H, l'étape E44 est réitérée.

Sinon, lors d'une étape E46, le module de traitement TRA envoie une requête de mesures REQ au capteur C2, à travers le module de communication MCO.

La requête REQ est reçue par le module de communication COM du capteur C2 lors d'une étape E48.

Puis, lors d'une étape E50, le module de préparation de messages PREP du capteur C2 accède à la mémoire MEM et y lit le premier rapport de mesures RM1.

L'étape E50 est suivie d'une étape E52 lors de laquelle le module de préparation de messages PREP compose un message M11 comprenant le premier rapport de mesures RM1.

Puis, lors d'une étape suivante E54, le module de préparation de messages PREP transmet au dispositif de collecte DB2, en réponse à la requête REQ, le message M11 via le module de communication COM et le réseau R.

Le message M11 est reçu par le module de communication MCO du dispositif de collecte DB2 et transmis pour traitement au module de collecte COL (étape E56).

Les étapes E44 à E56 sont ensuite réitérées avec les dates d'envoi suivantes DP2, DP3...

Ainsi, un message M12 contenant le rapport de mesures RM2 et le rapport de mesures RM3 est transmis par le capteur C2 suite à la réception d'une requête émise par le dispositif de collecte DB2 à la date d'envoi DP2, un message M13 contenant un rapport de mesures erroné est transmis par le capteur C2 suite à la réception d'une requête émise par le dispositif de collecte DB2 à la date d'envoi DP3...

Alors que les rapports de mesures sont établis régulièrement toutes les périodes, ces rapports de mesures sont transmis selon une loi aléatoire rendant impossible la prévision d'une date de transmission.

La loi de distribution utilisée pour la détermination des dates d'envois dans les modes de réalisation décrits est soit une loi de distribution uniforme, soit une loi de distribution exponentielle. A titre d'alternative, une autre loi de distribution peut être utilisée.

Selon un mode de réalisation choisi et représenté à la figure 9, un dispositif de gestion mettant en oeuvre un procédé de gestion selon l'invention est par exemple un dispositif 100 qui comporte de façon connue, notamment une unité de traitement 102 équipée d'un microprocesseur, une mémoire morte de type ROM ou EEPROM 103, une mémoire vive de type RAM 104, une interface de communication 105 avec un réseau de communication R.

Le dispositif 100 possède également des moyens d'accès à une mémoire de mesures d'un capteur associé ou d'un dispositif de collecte associé. Par exemple, le dispositif de gestion est apte à dialoguer avec le capteur ou le dispositif de collecte via un module de communication (non représenté) par liaison filaire ou sans fil.

La mémoire morte 103 comporte des registres mémorisant un programme d'ordinateur PG comportant des instructions de programme adaptées à réaliser les étapes d'un procédé de gestion selon l'invention.

Lors de la mise sous tension, le programme PG stocké dans la mémoire de type EEPROM 103 est transféré dans la mémoire vive qui contiendra alors un code exécutable ainsi que des registres pour mémoriser les variables nécessaires à la mise en oeuvre d'une étape de détermination selon une loi de distribution aléatoire d'une date d'envoi par ensemble de mesures de la pluralité et d'une étape de transmission d'un message relatif à au moins un ensemble de mesures, à une des dates d'envoi déterminées pour la pluralité.

De manière plus générale un moyen de stockage, lisible par un ordinateur ou par un microprocesseur, intégré ou non au dispositif, éventuellement amovible, mémorise un programme mettant en oeuvre les étapes d'un procédé de gestion selon l'invention.

## Revendications

1. Procédé de gestion d'envois d'une pluralité d'ensembles de mesures effectuées périodiquement par un capteur de mesures (C1, C2) apte à communiquer avec un dispositif de collecte (DB1, DB2) à travers un réseau radio (R) **caractérisé en ce qu'**il comporte :
- une étape de détermination (E2, E22, E42) d'une date d'envoi (DM, DA) par ensemble de mesures (EM) de la pluralité, la détermination d'une dite date d'envoi comprenant une détermination d'une fenêtre temporelle et une détermination d'une valeur aléatoire selon une loi de distribution aléatoire sur ladite fenêtre, ladite date d'envoi étant ladite valeur aléatoire;
- une étape de transmission (E10, E32, E46) d'un message relatif à au moins un ensemble de mesures, à une des dates d'envoi déterminées pour la pluralité.

2. Procédé de gestion selon la revendication 1 **caractérisé en ce que** le message relatif à l'ensemble de mesures est un message comprenant un rapport de mesures relatif à l'ensemble de mesures effectuées par le capteur.

3. Procédé de gestion selon la revendication 1 **caractérisé en ce que** le message relatif à l'ensemble de mesures est une demande de rapport de mesures.

4. Procédé de gestion selon la revendication 1 **caractérisé en ce que** le message relatif à un ensemble de mesures est transmis à la date d'envoi déterminée pour ledit ensemble de mesures.

5. Procédé de gestion selon la revendication 1 **caractérisé en ce que** le message relatif à un ensemble de mesures est transmis à la date d'envoi déterminée pour un ensemble de mesures précédent.

6. Procédé de gestion selon la revendication 1 **caractérisé en ce que** ledit message est relatif à au moins un premier et un deuxième ensembles de mesures et est transmis à une des dates déterminées pour un de ces deux ensembles de mesures.

7. Procédé de gestion selon la revendication 6 **caractérisé en ce qu'**il comprend en outre une étape de transmission d'un message relatif à un faux ensemble de mesures et/ou à un ensemble de mesures redondantes à une autre des dates déterminées pour un de ces deux ensembles de mesures.

8. Procédé de gestion selon la revendication 6 **caractérisé en ce qu'**aucun message n'est transmis à une autre des dates déterminées pour un de ces deux ensembles de mesures.

9. Procédé de gestion selon la revendication 1 **caractérisé en ce que** la loi de distribution aléatoire est une loi de distribution uniforme.

10. Procédé de gestion selon la revendication 1 **caractérisé en ce que** la loi de distribution aléatoire est une loi de distribution exponentielle.

11. Dispositif de gestion (DG1, DG2) d'envois d'une pluralité d'ensembles de mesures effectuées périodiquement par un capteur de mesures apte à communiquer avec un dispositif de collecte à travers un réseau radio **caractérisé en ce qu'**il comporte :
- des moyens de détermination d'une date d'envoi par ensemble de mesures de la pluralité, lesdits moyens comprenant pour la détermination d'une dite date d'envoi des moyens de détermination d'une fenêtre temporelle et des moyens de détermination d'une valeur aléatoire selon une loi de distribution aléatoire sur ladite fenêtre, ladite date d'envoi étant ladite valeur aléatoire;
- des moyens de transmission d'un message relatif à au moins un ensemble de mesures, à une des dates d'envoi déterminées pour la pluralité.

12. Capteur (C1) **caractérisé en ce qu'**il comprend un dispositif de gestion selon la revendication 11.

13. Dispositif de collecte (DB2) **caractérisé en ce qu'**il comprend un dispositif de gestion selon la revendication 11.

14. Produit programme d'ordinateur comprenant des instructions pour mettre en oeuvre les étapes du procédé de gestion d'envois d'une pluralité d'ensembles de mesures selon la revendication 1, lorsqu'il est chargé et exécuté par un processeur.

## Patentansprüche

1. Verfahren zur Verwaltung von Sendungen einer Vielzahl von Einheiten von Messungen, die periodisch von einem Messwertsensor (C1, C2) durchgeführt werden, der über ein Funknetz (R) mit einer Sammelvorrichtung (DB1, DB2) kommunizieren kann, **dadurch gekennzeichnet, dass** es aufweist:
- einen Schritt der Festlegung (E2, E22, E42) eines Sendedatums (DM, DA) pro Einheit von Messungen (EM) der Vielzahl, wobei die Festlegung eines Sendedatums die Festlegung eines Zeitfensters und eine Festlegung eines Zufallswerts gemäß einem Zufallsverteilungsgesetz in dem Fenster enthält, wobei das Sendedatum der Zufallswert ist;
- einen Schritt der Übertragung (E10, E32, E46) einer Mitteilung bezüglich mindestens einer Einheit von Messungen an einem der für die Vielzahl festgelegten Sendedaten.

2. Verwaltungsverfahren nach Anspruch 1, **dadurch gekennzeichnet, dass** die Mitteilung bezüglich der Einheit von Messungen eine Mitteilung ist, die einen Messbericht bezüglich der vom Messwertsensor durchgeführten Einheit von Messungen enthält.

3. Verwaltungsverfahren nach Anspruch 1, **dadurch gekennzeichnet, dass** die Mitteilung bezüglich der Einheit von Messungen eine Anforderung eines Messberichts ist.

4. Verwaltungsverfahren nach Anspruch 1, **dadurch gekennzeichnet, dass** die Mitteilung bezüglich einer Einheit von Messungen an dem für die Einheit von Messungen festgelegten Sendedatum übertragen wird.

5. Verwaltungsverfahren nach Anspruch 1, **dadurch gekennzeichnet, dass** die Mitteilung bezüglich einer Einheit von Messungen an dem für eine vorhergehende Einheit von Messungen festgelegten Sendedatum übertragen wird.

6. Verwaltungsverfahren nach Anspruch 1, **dadurch gekennzeichnet, dass** die Mitteilung sich auf mindestens eine erste und eine zweite Einheit von Messungen bezieht und an einem der für eine dieser zwei Messwerteinheiten festgelegten Daten übertragen wird.

7. Verwaltungsverfahren nach Anspruch 6, **dadurch gekennzeichnet, dass** es außerdem einen Schritt der Übertragung einer Mitteilung bezüglich einer falschen Einheit von Messungen und/oder einer Einheit von redundanten Messungen an einem anderen der für eine dieser zwei Messwerteinheiten festgelegten Daten enthält.

8. Verwaltungsverfahren nach Anspruch 6, **dadurch gekennzeichnet, dass** keine Mitteilung an einem anderen der festgelegten Daten für eine dieser zwei Messwerteinheiten übertragen wird.

9. Verwaltungsverfahren nach Anspruch 1, **dadurch gekennzeichnet, dass** das Zufallsverteilungsgesetz ein gleichmäßiges Verteilungsgesetz ist.

10. Verwaltungsverfahren nach Anspruch 1, **dadurch gekennzeichnet, dass** das Zufallsverteilungsgesetz ein exponentiales Verteilungsgesetz ist.

11. Verwaltungsvorrichtung (DG1, DG2) von Sendungen einer Vielzahl von Messungen, die periodisch von einem Messwertsensor durchgeführt werden, der über ein Funknetz mit einer Sammelvorrichtung kommunizieren kann, **dadurch gekennzeichnet, dass** sie aufweist:
- Einrichtungen zur Festlegung eines Sendedatums pro Einheit von Messungen der Vielzahl, wobei die Einrichtungen für die Festlegung eines Sendedatums Einrichtungen zur Festlegung eines Zeitfensters und Einrichtungen zur Festlegung eines Zufallswerts gemäß einem Gesetz der Zufallsverteilung in dem Fenster enthalten, wobei das Sendedatum der Zufallswert ist;
- Einrichtungen zur Übertragung einer Mitteilung bezüglich mindestens einer Einheit von Messungen an einem der für die Vielzahl festgelegten Sendedaten.

12. Sensor (C1), **dadurch gekennzeichnet, dass** er eine Verwaltungsvorrichtung nach Anspruch 11 enthält.

13. Sammelvorrichtung (DB2), **dadurch gekennzeichnet, dass** sie eine Verwaltungsvorrichtung nach Anspruch 11 enthält.

14. Computerprogrammprodukt, das Anweisungen enthält, um die Schritte des Verwaltungsverfahrens von Sendungen einer Vielzahl von Messwerteinheiten nach Anspruch 1 anzuwenden, wenn es in einen Prozessor geladen und von ihm ausgeführt wird.

## Claims

1. Method for managing transmissions of a plurality of sets of measurements performed periodically by a measurement sensor (C1, C2) capable of communicating with a collection device (DB1, DB2) via a radio network (R) **characterized in that** it comprises:
- a step of determining (E2, E22, E42) a date of transmission (DM, DA) for each set of measurements (EM) of the plurality, the determination of one said date of transmission comprising a determination of a time window and a determination of a random value according to a random distribution law over said window, said date of transmission being said random value;
- a step of transmitting (E10, E32, E46) a message relating to at least one set of measurements, on one of the dates of transmission determined for the plurality.

2. Management method according to Claim 1, **characterized in that** the message relating to the set of measurements is a message comprising a measurement report relating to the set of measurements performed by the sensor.

3. Management method according to Claim 1, **characterized in that** the message relating to the set of measurements is a measurement report request.

4. Management method according to Claim 1, **characterized in that** the message relating to a set of measurements is transmitted on the date of transmission determined for said set of measurements.

5. Management method according to Claim 1, **characterized in that** the message relating to a set of measurements is transmitted on the date of transmission determined for a preceding set of measurements.

6. Management method according to Claim 1, **characterized in that** said message relates to at least one first and one second sets of measurements and is transmitted on one of the dates determined for one of these two sets of measurements.

7. Management method according to Claim 6, **characterized in that** it also comprises a step of transmitting a message relating to a false set of measurements and/or to a set of redundant measurements on another of the dates determined for one of these two sets of measurements.

8. Management method according to Claim 6, **characterized in that** no message is transmitted on another of the dates determined for one of these two sets of measurements.

9. Management method according to Claim 1, **characterized in that** the random distribution law is a uniform distribution law.

10. Management method according to Claim 1, **characterized in that** the random distribution law is an exponential distribution law.

11. Device (DG1, DG2) for managing transmissions of a plurality of sets of measurements performed periodically by a measurement sensor capable of communicating with a collection device via a radio network, **characterized in that** it comprises:
- means for determining a date of transmission for each set of measurements of the plurality, said means comprising, for the determination of one said date of transmission, means for determining a time window and means for determining a random value according to a random distribution law over said window, said date of transmission being said random value;
- means for transmitting a message relating to at least one set of measurements, on one of the dates of transmission determined for the plurality.

12. Sensor (C1), **characterized in that** it comprises a management device according to Claim 11.

13. Collection device (DB2), **characterized in that** it comprises a management device according to Claim 11.

14. Computer program product comprising instructions for implementing the steps of the method for managing transmissions of a plurality of sets of measurements according to Claim 1, when it is loaded and run by a processor.
